(19)

Europäisches
Patentamt
European
Patent Office
Office européen
des brevets

(11)  **EP 3 954 195 A1**

(12)  **EUROPEAN PATENT APPLICATION**
published in accordance with Art. 153(4) EPC

| | |
|---|---|
| (43) Date of publication:<br>**16.02.2022 Bulletin 2022/07** | (51) Int Cl.:<br>**A01D 45/00** (2018.01)    **B65G 41/00** (2006.01) |
| (21) Application number: **19928051.2** | (86) International application number:<br>**PCT/CN2019/090809** |
| (22) Date of filing: **12.06.2019** | (87) International publication number:<br>**WO 2020/224029 (12.11.2020 Gazette 2020/46)** |

| | |
|---|---|
| (84) Designated Contracting States:<br>**AL AT BE BG CH CY CZ DE DK EE ES FI FR GB<br>GR HR HU IE IS IT LI LT LU LV MC MK MT NL NO<br>PL PT RO RS SE SI SK SM TR**<br>Designated Extension States:<br>**BA ME**<br>Designated Validation States:<br>**KH MA MD TN** | (72) Inventors:<br>• **LI, Shaohua**<br>  **Quanzhou, Fujian 362411 (CN)**<br>• **GONG, Huaqin**<br>  **Quanzhou, Fujian 362411 (CN)**<br>• **LIU, Dong**<br>  **Quanzhou, Fujian 362411 (CN)**<br>• **LI, Jing**<br>  **Quanzhou, Fujian 362411 (CN)** |
| (30) Priority:  **07.05.2019  CN 201910376594<br>10.06.2019  CN 201910496151** | (74) Representative: **Sach, Greg Robert<br>C/o KA Filing (EU) Limited<br>Siedlungsstr. 4a<br>85253 Erdweg (DE)** |
| (71) Applicant: **Fujian Sanan Sino-Science<br>Photobiotech Co., Ltd.<br>Quanzhou, Fujian 362411 (CN)** | |

(54)    **DEVICE SUITABLE FOR AUTOMATICALLY HARVESTING SOILLESS CULTURE SPROUTS**

(57)    The present invention relates to the technical field of hydroponics, and in particular to a device for automatic harvest of hydroponic sprouts. The device includes a bottom supporting frame, a conveying mechanism and a cutting mechanism, where the conveying mechanism is arranged on the bottom supporting frame, the cutting mechanism is arranged on the conveying mechanism, the conveying mechanism moves horizontally, an included angle $\alpha$ is formed between the conveying mechanism and a horizontal plane, and the included angle $\alpha$ is larger than or equal to 30° and less than or equal to 90°. According to the present invention, a lifting mechanism lifts a longer side edge of one end of the conveying mechanism up, such that an included angle is formed between the conveying mechanism and the bottom supporting frame, and the sprouts cut by the cutting mechanism incline to fall down into a sprout collecting box. Thus, the sprouts are effectively prevented from directly falling onto a culture plate, thereby reducing later treatment procedures and increasing production efficiency.

FIG. 1

EP 3 954 195 A1

**Description**

TECHNICAL FIELD

The present invention relates to the technical field of hydroponics, and in particular to a device for automatic harvest of hydroponic sprouts.

BACKGROUND

Hydroponics is a technology of growing plants with the use of nutritional ingredients required for plant growth and natural light, artificial light or supplementary light. Recently, the hydroponics has been widely applied in large-area culture in greenhouses, plastic houses, plant factories, etc.

But in the prior art, a device is horizontally arranged during harvest, so sprouts cut by the device will fall onto a culture plate and have to be manually picked later, thereby wasting a large amount of human and material resources and influencing harvest progress.

SUMMARY

In view of this, it is necessary to provide a device for automatic harvest of hydroponic sprouts. Through the rational layout and cooperative operation of all structures, the sprouts cut by the device may fall into a collecting tank instead of falling onto a culture plate, so later treatment procedures are effectively and directly reduced and production progress is increased.

In order to achieve the object, the present invention provides a device for automatic harvest of hydroponic sprouts. The device includes a bottom supporting frame, a conveying mechanism and a cutting mechanism, where the conveying mechanism is arranged on the bottom supporting frame, the cutting mechanism is arranged on the conveying mechanism, the conveying mechanism moves horizontally, an included angle $\alpha$ is formed between the conveying mechanism and a horizontal plane, and the included angle $\alpha$ is larger than or equal to 30° and less than or equal to 90°. Due to the fact that the conveying mechanism is inclined so the sprouts may incline after being cut by the cutting mechanism, the sprouts may fall down towards a lower end, so that the sprouts are prevented from falling onto a culture plate.

Furthermore, the bottom supporting frame includes a supporting plate and a supporting leg fixedly arranged under the supporting plate, a sprout collecting box is arranged beside the supporting leg, and a supporting plate is provided with an avoidance groove. Thus, a whole supporting frame is formed, and the device is stable and firm during operation.

Furthermore, the bottom supporting frame is provided with a lifting mechanism, and an output end of the lifting mechanism is fixedly connected to the conveying mechanism. Thus, the conveying mechanism may be controlled and lifted.

Furthermore, the lifting mechanism includes a lifting machine and a control console, the control console is fixedly connected to a bottom of a supporting plate, the lifting machine is fixedly connected to the control console, and an output end of the lifting machine penetrates through an avoidance groove to be fixedly connected to the conveying mechanism. Thus, the conveying mechanism may be controlled and stably lifted up and inclined.

Furthermore, the conveying mechanism includes a mounting seat, a conveying belt and limiting structures, a lifting rod is arranged under the mounting seat, the lifting rod is arranged on the supporting plate, the mounting seat is fixedly connected to the output end of the lifting machine, the conveying belt is arranged on the mounting seat, the limiting structures are arranged at two sides of the mounting seat, an included angle $\alpha$ is formed between the mounting seat and the supporting plate, and the included angle $\alpha$ is larger than or equal to 30° and less than or equal to 90°. Thus, the culture plate is stably conveyed and positioned at a designated position so as to prevent the culture plate from moving and deviating, and thus avoiding an insignificant effect when an angle is too small and toppling when the angle is too large.

Furthermore, the conveying belt on the conveying mechanism is a chain bar conveying belt, the chain bar conveying belt is provided with a plurality of movable connecting seats and a plurality of lifting air cylinders, the supporting leg is provided with a supporting seat, one ends of the plurality of movable connecting seats are arranged on the supporting seat, the plurality of lifting air cylinders are arranged on the supporting seat, output ends of the lifting air cylinders are fixedly connected to the other ends of the movable connecting seats, the lifting air cylinders drive the other ends of the movable connecting seats to ascend or descend, the number of the movable connecting seats is consistent with the number of the lifting air cylinders, and a chain bar on the chain bar conveying belt is provided with a clasp. Thus, the culture plate moving horizontally is gradually changed to an inclined moving state.

Furthermore, the cutting mechanism includes a fixed supporting frame and a cutting machine, the fixed supporting frame is arranged on a mounting seat of the conveying mechanism, and the cutting machine is arranged below the fixed supporting frame. Thus, the cutting mechanism may operate more stably.

Furthermore, the cutting machine includes a fixed machine shell, a servo motor and a cutter, the fixed machine shell is fixedly connected to a connecting block, the servo motor is arranged on the fixed machine shell, and an output end of the servo motor is fixedly connected to the cutter. Thus, the sprouts are effectively and stably harvested.

Furthermore, the sprout collecting box includes a collecting tank and an anti-throw plate, the collecting tank is arranged on the supporting leg, the anti-throw plate is fixedly connected to the collecting tank, and the collecting tank is internally provided with an automatic conveying belt. Thus, the cut sprouts are well collected without manual operation.

Compared with the prior art, the technical solution has the following beneficial effects:

1. According to the present invention, the lifting mechanism lifts a longer side edge of one end of the conveying mechanism up, such that an included angle is formed between the conveying mechanism and the bottom supporting frame, and the sprouts cut by the cutting mechanism incline to fall down into a sprout collecting box, so that the sprouts are effectively prevented from directly falling onto the culture plate, thus reducing later treatment procedures and increasing production efficiency.

2. The present invention is provided with the lifting mechanism, and the control console on the lifting mechanism controls the lifting machine, so that a range of the included angle formed between a conveying device and the bottom supporting frame may be more conveniently controlled, thus avoiding the insignificant effect when the angle is too small and the toppling when the angle is too large.

3. The present invention modifies the conveying belt on the conveying mechanism into the chain bar conveying belt, the device is provided with the plurality of movable connecting seats and lifting air cylinders, and then the lifting air cylinders lift movable plates to different levels correspondingly, so that the movable plate is inclined, the conveying belt becomes inclined due to increase in angle from one horizontal end to the other end, the culture plate moving horizontally may change into the inclined moving state, and the culture plate does not need to be placed on the device manually in an inclined mode, thus reducing manual labor pressure.

BRIEF DESCRIPTION OF THE DRAWINGS

FIG. 1 is a structural schematic diagram of a device for automatic harvest of hydroponic sprouts;
FIG. 2 is a structural schematic diagram of a bottom supporting frame in Embodiment 1;
FIG. 3 is a structural schematic diagram of a lifting mechanism in the Embodiment 1;
FIG. 4 is a structural schematic diagram of a conveying mechanism in the Embodiment 1;
FIG. 5 is a structural schematic diagram of a side view of the conveying mechanism in the Embodiment 1;
FIG. 6 is a structural schematic diagram of a cutting mechanism in the Embodiment 1;
FIG. 7 is a structural schematic diagram of a cutting machine in the Embodiment 1;
FIG. 8 is a structural schematic diagram of a sprout collecting box in the Embodiment 1;
FIG. 9 is a structural schematic diagram of a conveying mechanism in Embodiment 2;
FIG. 10 is a structural schematic diagram of a rear view of the conveying mechanism in the Embodiment 2; and
FIG. 11 is a structural schematic diagram of a side view of the conveying mechanism in the Embodiment 2.

Description of reference numerals:

1, bottom supporting frame, 101, supporting leg, 102, supporting plate, 103, avoidance groove, 104, sprout collecting box, 1041, collecting tank, 1042, anti-throw plate, 1043, automatic conveying belt, 2, lifting mechanism, 201, control console, 202, lifting machine, 3, conveying mechanism, 301, mounting seat, 302, conveying belt, 303, limiting structure, 304, lifting rod, 305, movable connecting seat, 306, chain bar conveying belt, 307, supporting seat, 308, lifting air cylinder, 309, clasp, 4, cutting mechanism, 401, fixed supporting frame, 402, cutting machine, 4021, fixed machine shell, 4022, servo motor, and 4023, cutter.

DETAILED DESCRIPTION OF THE EMBODIMENTS

In order to describe the technical contents, structural features, achieved objectives and effects of the technical solution in detail, the following detailed description will be given in conjunction with specific embodiments and accompanying drawings.

Example 1:

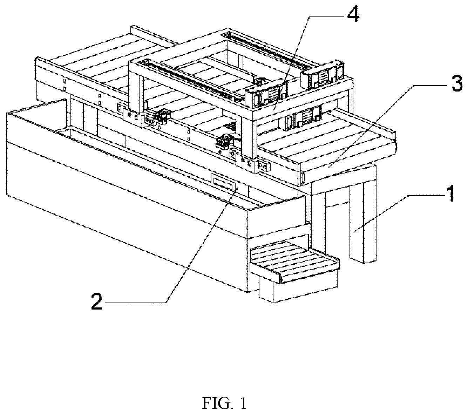

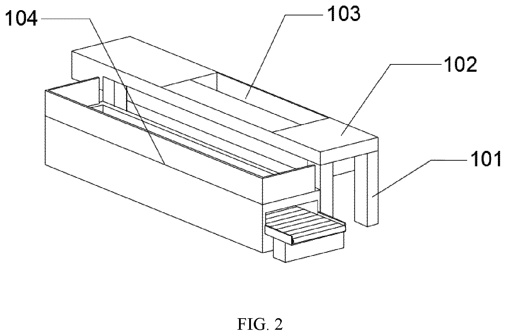

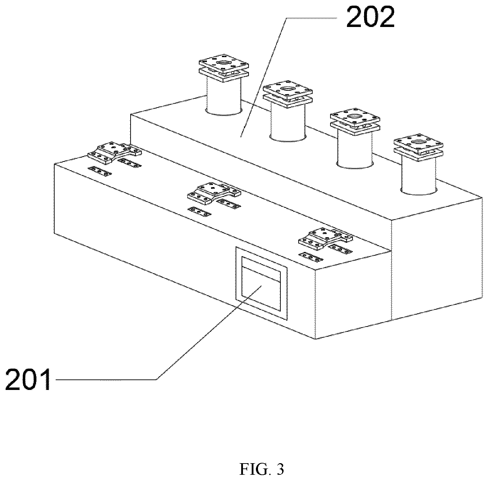

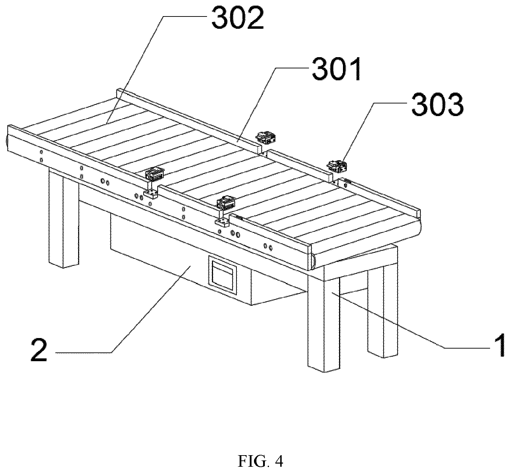

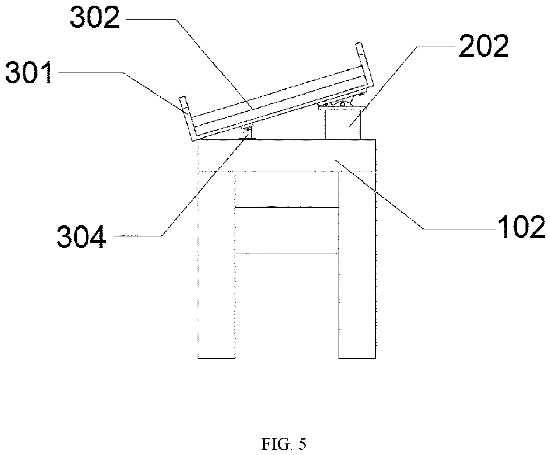

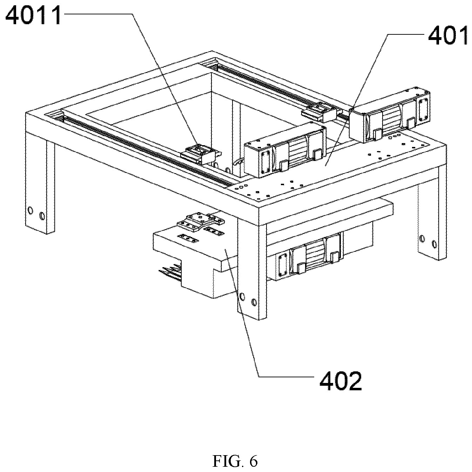

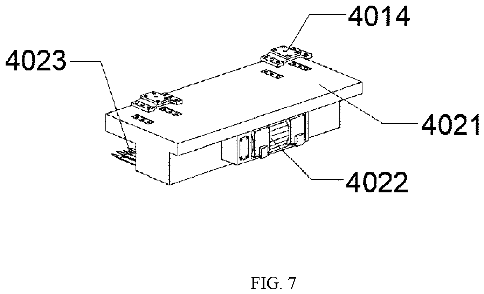

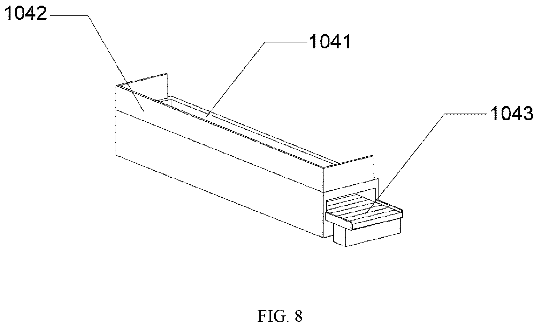

With reference to FIGs. 1-8, a device for automatic harvest of hydroponic sprouts of the present invention includes a bottom supporting frame 1, a conveying mechanism 3 and a cutting mechanism 4, where the conveying mechanism 3 is arranged on the bottom supporting frame 1, the cutting mechanism 4 is arranged on the conveying mechanism 3, the conveying mechanism 3 moves horizontally, an included angle α is formed between the conveying mechanism 3 and a horizontal plane, and the included angle α is larger than or equal to 30° and less than or equal to 90°. The bottom supporting frame 1 includes a supporting plate 102 and a supporting leg 101 fixedly arranged under the supporting plate, a sprout collecting box is arranged beside the supporting leg 101, the four supporting legs 101 are vertically and symmetrically arranged, the sprout collecting box 104 is arranged at a long side of the supporting leg 101, a face at a long side of the sprout collecting box 104 abuts against the long side of the supporting leg 101, a length of the sprout collecting box 104 is consistent with that of the long side of the supporting leg 101, the sprout collecting box 104 includes a collecting tank 1041 and an anti-throw plate 1042, a face at a long side of the collecting tank 1041 abuts against the long side of the supporting leg 101, a lower end of the anti-throw plate 1042 is fixedly connected to an upper end of the collecting tank 1041, the anti-throw plate 1042 is provided with three faces and an opening facing the supporting leg 101, the collecting tank 1041 is internally provided with an automatic conveying belt 1043, and the automatic conveying belt 1043 is used to convey out and package the sprouts in the collecting tank 1041. The four supporting legs 101 are vertically and fixedly connected to four corners of a supporting plate 102 correspondingly, the supporting plate 102 is provided with an avoidance groove 103, and the avoidance groove 103 in the supporting plate 102 is used to erect an output end of a lifting mechanism 2.

In the example, the lifting mechanism 2 includes a lifting machine 202 and a control console 201, the control console 201 is fixedly connected to a bottom of the supporting plate 102, an upper end of the control console 201 is fixedly connected to a lower portion of one end, without the avoidance groove 103, of the supporting plate 102, a side face of the lifting machine 202 is fixedly connected to a side face of the control console 201, and an output end of the lifting machine 202 penetrates through the avoidance groove 103 to be fixedly connected to the conveying mechanism 3. Specifically, the conveying mechanism 3 includes a mounting seat 301, a conveying belt 302 and limiting structures 303, a lifting rod 304 is arranged under the mounting seat 301, the lifting rod 304 is fixedly mounted at a lower end at a long side of the mounting seat 301, a lower end of the lifting rod 304 is fixedly mounted at a long side, symmetrical to the avoidance groove 103, of the supporting plate 102, it is ensured that the other end is stable and not inclined while one end ascends, the other end of the mounting seat 301 is fixedly connected to the output end of the lifting machine 202, the lifting machine 202 is symmetrical to the lifting rod 304, the conveying belt 302 is arranged on the mounting seat 301, the conveying belt 302 is integrally embedded in the mounting seat 301, the limiting structures 303 are symmetrically arranged at long sides of the mounting seat 301, the mounting seat 301 forms an included angle with the supporting plate 102 when being lifted by the lifting machine 202, that is, the included angle α is formed between a short side of the mounting seat 301 and a short side, intersecting with the short side of the mounting seat, of the supporting plate 102, and the α is larger than or equal to 30° and less than or equal to 90°.

In the example, the cutting mechanism 4 includes a fixed supporting frame 401 and a cutting machine 402, the fixed supporting frame 401 is arranged on the mounting seat 301 of the conveying mechanism 3, four supporting legs of the fixed supporting frame 401 are symmetrically and fixedly mounted at the long side of the mounting seat 301, the cutting machine 402 is arranged below the fixed supporting frame 401, specifically, the cutting machine 402 includes a fixed machine shell 4021, a servo motor 4022 and a cutter 4023, an upper end of the fixed machine shell 4021 is fixedly connected to a lower end of a connecting block 4014, the servo motor 4022 is fixedly mounted at a side face of the fixed machine shell 4021, the cutter 4023 is mounted at the other side, symmetrical to the servo motor 4022, of the fixed supporting frame 4021, an output end of the servo motor 4022 is fixedly connected to a side end of the cutter 4023, and then the servo motor 4022 drives the cutter 4023 to conduct cutting.

In specific operation, an inclination angle required for the conveying mechanism 3 is controlled by means of the lifting mechanism 2, a culture plate to be subjected to harvest is conveyed to a position below the cutting mechanism by means of the conveying mechanism 3, then the limiting structures 303 fix the culture plate, the sprouts on the culture plate are cut, and then the culture plate is conveyed to a next procedure. Specifically, the control console 201 on the lifting mechanism 2 controls the lifting machine 202, the output end of the lifting machine 202 drives one end of the mounting seat 301 on the conveying mechanism 3 to ascend, then the mounting seat 301 drives the conveying belt 302 and the cutting mechanism 4 to incline together, and meanwhile, the lifting rod 304 under the other end of the mounting seat 301 may also ascend according to a lifting condition, so that the mounting seat 301 is stable and firm. The conveying belt 302 on the conveying mechanism 3 conveys the culture plate to be subjected to harvest to the position below the cutting mechanism 4, and the limiting structures 303 fix the culture plate, so that the servo motor 4022 on the cutting mechanism 4 drives the cutter 4023 to cut the sprouts on the culture plate. The cut sprouts may fall downwards due to an inclined state of the conveying mechanism 3, so that the sprouts fall into the collecting tank 1041 on the sprout collecting box 104. The anti-throw plate 1042 may effectively prevent some sprouts from being accidentally thrown out during operation. In conclusion, the sprouts cut by the device may fall into the collecting tank 1041 but may not directly fall onto the culture plate, so that later manual treatment procedures are effectively and directly reduced, human and material resources are reduced, and production progress is accelerated.

Example 2:

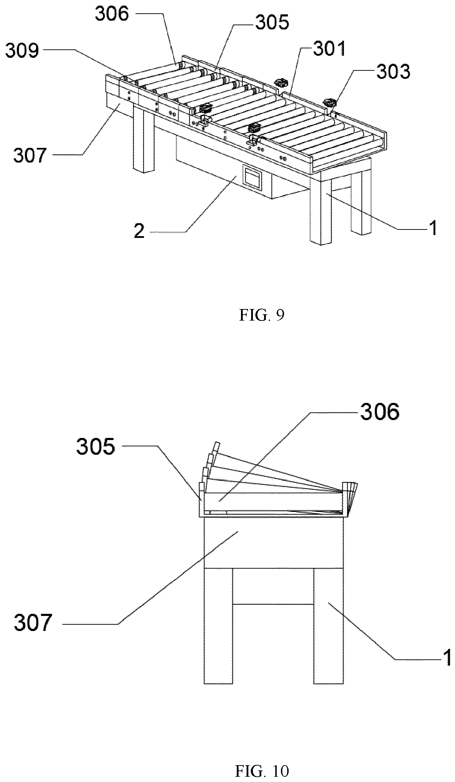

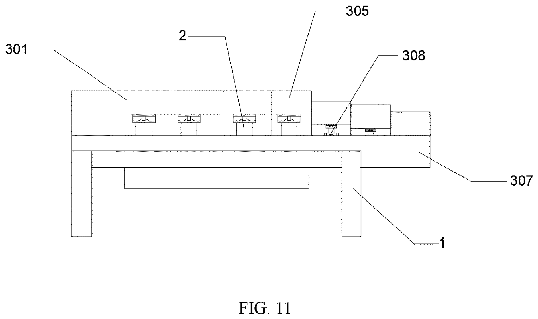

With reference to FIGs. 9-11, a device for automatic harvest of hydroponic sprouts of the present invention includes a bottom supporting frame 1, a lifting mechanism 2, a conveying mechanism 3 and a cutting mechanism 4, where the lifting mechanism 2 includes the bottom supporting frame 1, the conveying mechanism 3 and the cutting mechanism 4, the conveying mechanism 3 is arranged on the bottom supporting frame 1, the cutting mechanism 4 is arranged on the conveying mechanism 3, the conveying mechanism 3 moves horizontally, an included angle $\alpha$ is formed between the conveying mechanism 3 and a horizontal plane, and the included angle $\alpha$ is larger than or equal to 30° and less than or equal to 90°. The bottom supporting frame 1 includes a supporting plate 102 and a supporting leg 101 fixedly arranged under the supporting plate, a sprout collecting box is arranged beside the supporting leg 101, the four supporting legs 101 are vertically and symmetrically arranged, the sprout collecting box 104 is arranged at a long side of the supporting leg 101, a face at a long side of the sprout collecting box 104 abuts against the long side of the supporting leg 101, a length of the sprout collecting box 104 is consistent with that of the long side of the supporting leg 101, the sprout collecting box 104 includes a collecting tank 1041 and an anti-throw plate 1042, a face at a long side of the collecting tank 1041 abuts against the long side of the supporting leg 101, a lower end of the anti-throw plate 1042 is fixedly connected to an upper end of the collecting tank 1041, the anti-throw plate 1042 is provided with three faces and an opening facing the supporting leg 101, the collecting tank 1041 is internally provided with an automatic conveying belt 1043, and the automatic conveying belt 1043 is used to convey out and package the sprouts in the collecting tank 1041. The four supporting legs 101 are vertically and fixedly connected to four corners of a supporting plate 102 correspondingly, the supporting plate 102 is provided with an avoidance groove 103, and the avoidance groove 103 in the supporting plate 102 is used to erect an output end of a lifting mechanism 2.

In the example, the lifting mechanism 2 includes a lifting machine 202 and a control console 201, the control console 201 is fixedly connected to a bottom of the supporting plate 102, an upper end of the control console 201 is fixedly connected to a lower portion of one end, without the avoidance groove 103, of the supporting plate 102, a side face of the lifting machine 202 is fixedly connected to a side face of the control console 201, and an output end of the lifting machine 202 penetrates through the avoidance groove 103 to be fixedly connected to the conveying mechanism 3. Specifically, the conveying belt 302 on the conveying mechanism 3 is a chain bar conveying belt 306, the chain bar conveying belt 306 is provided with a plurality of movable connecting seats 305 and a plurality of lifting air cylinders 308, the supporting leg 101 is provided with a supporting seat 307, one ends of the plurality of movable connecting seats 305 are arranged on the supporting seat 307, the plurality of lifting air cylinders 308 are arranged on the supporting seat 307, output ends of the lifting air cylinders 308 and the output end of the lifting machine 202 are located at the same side, the output ends of the lifting air cylinders 308 are fixedly connected to the other ends of the movable connecting seats 305, and the lifting air cylinders 308 drive the other ends of the movable connecting seats to ascend or descend so as to drive one end of the chain bar conveying belt 302 to ascend or descend. Through cooperation of the plurality of lifting air cylinders 308 and the plurality of movable connecting seats 305, angles of the movable connecting seats are gradually increased, the angle ranges from 30° to 90°. The number of the movable connecting seats 305 is consistent with the number of the lifting air cylinders 308. A chain bar on the chain bar conveying belt 306 is provided with a clasp 309, the clasps 309 sleeve two symmetrical ends of the chain bar, and the clasp 309 is used to prevent the culture plate from moving back.

During actual use, the lifting mechanism 2 lifts one end of the chain bar conveying belt 306 to a certain level, heights are increased from a horizontal end to one end lifted by the lifting mechanism 2 by a certain angle by means of the lifting air cylinder 308, the movable connecting seat 305 is driven to ascend, and then an inclination angle of the movable connecting seat 305 is consistent with that of a part close to the end lifted by the lifting mechanism 2, so that a horizontal state is gradually changed to an inclined state. The clasp 309 is used to prevent the culture plate from moving back, so the culture plate does not need to be manually placed on the device in an inclined mode, thus reducing manual labor pressure.

The beneficial effects of the Example 2 are further highlighted by selecting different angles of the device for automatic harvest of sprouts in the example for harvest of sprouts with different heights and counting corresponding falling ratios of the sprouts in a harvest process under conditions of the different selected heights of the device and the different heights of the sprouts below.

In the comparative statistical example, four sprouts with different heights 12 cm, 14 cm, 16 cm and 18 cm are selected for harvest, an angle of the device for automatic harvest of sprouts is adjusted for the sprout with each height, and six different harvest angles 30°, 45°, 60°, 75°, 80° and 90° are selected. The device for automatic harvest of hydroponic sprouts in the Example 2 and a harvest mode used by the same are used to conduct harvest tests, and detailed results are as shown in the following table:

| Sprout height (cm) | Inclination angle (°) | Falling ratio (%) |
|---|---|---|
| 12 | 30 | 60.5 |
|  | 45 | 73.6 |
|  | 60 | 94.7 |
|  | 75 | 100 |
|  | 80 | 100 |
|  | 90 | 100 |
| 14 | 30 | 66.5 |
|  | 45 | 85.6 |
|  | 60 | 96 |
|  | 75 | 100 |
|  | 80 | 100 |
|  | 90 | 100 |
| 16 | 30 | 58.9 |
|  | 45 | 88 |
|  | 60 | 100 |
|  | 75 | 100 |
|  | 80 | 100 |
|  | 90 | 100 |
| 18 | 30 | 66.6 |
|  | 45 | 91.1 |
|  | 60 | 100 |
|  | 75 | 100 |
|  | 80 | 100 |
|  | 90 | 100 |

Note: the falling ratio is a ratio of sprouts falling from a sprout culture plate to harvested sprouts; and when the inclination angle is 80°-90° and sprouts are harvested when having large heights such as 16 cm and 18 cm, sprouts at a side may bend, so harvest and cutting cannot be completed thoroughly, and a harvest ratio may be reduced.

$$\text{Falling ratio (\%)} = \text{falling mass g} / (\text{mass before harvest (including the sprout culture plate)} - \text{mass after harvest (including the sprout culture plate))} \text{ g}.$$

From the above statistical data, is may be seen that the higher sprout height and inclination angle of the device for harvest result in the higher falling ratio, which further shows the beneficial effects of the device for harvest of sprouts of the example, that is, the device can adjust the angle in a wide range so as to adapt to the harvest of the sprouts with the different heights, and can effectively improve harvest efficiency of the sprouts through free adjustment of various angles.

It should be noted that relational terms herein such as first and second are only used to distinguish one entity or operation from another entity or operation without necessarily requiring or implying any actual such relation or order between such entities or operations. Moreover, the terms "include", "comprise" or any other variants thereof are intended to cover non-exclusive inclusion, so that a process, method, article or terminal device including a series of elements not only includes those elements, but also includes those elements that are not explicitly listed, or also includes elements inherent to this process, method, article or terminal device. Without more restrictions, the elements defined by the sentence "including a ..." or "comprising a ..." do not exclude the existence of other elements in the process, method, article, or terminal device including the elements. In addition, herein, "larger than", "less than", "exceeding", etc. are understood as excluding the number; "above", "below", "within", etc. are understood as including the number.

Although the above examples have been described, once the basic inventive concepts are known to those skilled in the art, additional changes and modifications may be made to these examples, so the foregoing is merely examples of the present invention and does not constitute a limitation on the scope of protection of the patent of the present invention. Any equivalent structure or equivalent process change made by using the description and the accompanying drawings of the present invention and applied to other related technical fields directly or indirectly shall still fall within the scope of protection of the patent of the present invention.

**Claims**

1.  A device for automatic harvest of hydroponic sprouts, comprising: a bottom supporting frame, a conveying mechanism and a cutting mechanism, wherein the conveying mechanism is arranged on the bottom supporting frame, the cutting mechanism is arranged on the conveying mechanism, the conveying mechanism moves horizontally, an included angle $\alpha$ is formed between the conveying mechanism and a horizontal plane, and the included angle $\alpha$ is larger than or equal to 30° and less than or equal to 90°.

2.  The device for automatic harvest of hydroponic sprouts according to claim 1, wherein the bottom supporting frame comprises a supporting plate and a supporting leg fixedly arranged under the supporting plate, a sprout collecting box is arranged beside the supporting leg, and a supporting plate is provided with an avoidance groove.

3.  The device for automatic harvest of hydroponic sprouts according to claim 2, wherein the bottom supporting frame is provided with a lifting mechanism, and an output end of the lifting mechanism is fixedly connected to the conveying mechanism.

4.  The device for automatic harvest of hydroponic sprouts according to claim 3, wherein the lifting mechanism comprises a lifting machine and a control console, the control console is fixedly connected to a bottom of a supporting plate, the lifting machine is fixedly connected to the control console, and an output end of the lifting machine penetrates through an avoidance groove to be fixedly connected to the conveying mechanism.

5.  The device for automatic harvest of hydroponic sprouts according to claim 4, wherein the conveying mechanism comprises a mounting seat, a conveying belt and limiting structures, a lifting rod is arranged under the mounting seat, the lifting rod is arranged on the supporting plate, the mounting seat is fixedly connected to the output end of the lifting machine, the conveying belt is arranged on the mounting seat, the limiting structures are arranged at two sides of the mounting seat, an included angle $\alpha$ is formed between the mounting seat and the supporting plate, and the included angle $\alpha$ is larger than or equal to 30° and less than or equal to 90°.

6.  The device for automatic harvest of hydroponic sprouts according to claim 5, wherein the conveying belt on the conveying mechanism is a chain bar conveying belt, the chain bar conveying belt is provided with a plurality of movable connecting seats and a plurality of lifting air cylinders, the supporting leg is provided with a supporting seat, one ends of the plurality of movable connecting seats are arranged on the supporting seat, the plurality of lifting air cylinders are arranged on the supporting seat, output ends of the lifting air cylinders are fixedly connected to the other ends of the movable connecting seats, the lifting air cylinders drive the other ends of the movable connecting seats to ascend or descend, the number of the movable connecting seats is consistent with the number of the lifting air cylinders, and a chain bar on the chain bar conveying belt is provided with a clasp.

7.  The device for automatic harvest of hydroponic sprouts according to claim 2, wherein the cutting mechanism comprises a fixed supporting frame and a cutting machine, the fixed supporting frame is arranged on a mounting seat of the conveying mechanism, and the cutting machine is arranged below the fixed supporting frame.

8.  The device for automatic harvest of hydroponic sprouts according to claim 7, wherein the cutting machine comprises a fixed machine shell, a servo motor and a cutter, the fixed machine shell is fixedly connected to a connecting block, the servo motor is arranged on the fixed machine shell, and an output end of the servo motor is fixedly connected to the cutter.

9.  The device for automatic harvest of hydroponic sprouts according to claim 2, wherein the sprout collecting box comprises a collecting tank and an anti-throw plate, the collecting tank is arranged on the supporting leg, the anti-throw plate is fixedly connected to the collecting tank, and the collecting tank is internally provided with an automatic conveying belt.

FIG. 1

FIG. 2

FIG. 3

FIG. 4

FIG. 5

FIG. 6

4014

4023

4021

4022

FIG. 7

1042

1041

1043

FIG. 8

FIG. 9

FIG. 10

FIG. 11

## INTERNATIONAL SEARCH REPORT

| International application No. |
| --- |
| **PCT/CN2019/090809** |

**A.    CLASSIFICATION OF SUBJECT MATTER**

A01D 45/00(2018.01)i;  B65G 41/00(2006.01)i

According to International Patent Classification (IPC) or to both national classification and IPC

**B.    FIELDS SEARCHED**

Minimum documentation searched (classification system followed by classification symbols)

A01D, B65G41

Documentation searched other than minimum documentation to the extent that such documents are included in the fields searched

Electronic data base consulted during the international search (name of data base and, where practicable, search terms used)

VEN, CNABS, CNTXT, SIPOABS, CNKI: 采收, 收集, 自动, 履带, 升降, 传送, 传输, 收获, HARVEST+, LIFT+, CONVEY +, BELT+

**C.    DOCUMENTS CONSIDERED TO BE RELEVANT**

| Category* | Citation of document, with indication, where appropriate, of the relevant passages | Relevant to claim No. |
| --- | --- | --- |
| X | CN 109392434 A (JIANGSU ACADEMY OF AGRICULTURAL SCIENCES) 01 March 2019 (2019-03-01) claims 1-8, description, paragraphs [0028]-[0039], and figures 1-9 | 1-9 |
| A | CN 107960196 A (ZHANG, Wenxin) 27 April 2018 (2018-04-27) entire document | 1-9 |
| A | US 6419093 B2 (GREGORY M. BOESE) 16 July 2002 (2002-07-16) entire document | 1-9 |
| A | US 5930987 A (MULTI PICKER INTERNATIONAL INC) 03 August 1999 (1999-08-03) entire document | 1-9 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **15 January 2020** | **11 February 2020** |

| Name and mailing address of the ISA/CN | Authorized officer |
| --- | --- |
| **China National Intellectual Property Administration (ISA/ CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**

Information on patent family members

International application No.

**PCT/CN2019/090809**

| Patent document cited in search report | | | Publication date (day/month/year) | Patent family member(s) | | | Publication date (day/month/year) |
|---|---|---|---|---|---|---|---|
| CN | 109392434 | A | 01 March 2019 | None | | | |
| CN | 107960196 | A | 27 April 2018 | None | | | |
| US | 6419093 | B2 | 16 July 2002 | US | 2001002682 | A1 | 07 June 2001 |
| | | | | US | 6199703 | B1 | 13 March 2001 |
| US | 5930987 | A | 03 August 1999 | None | | | |

Form PCT/ISA/210 (patent family annex) (January 2015)